# EUROPEAN PATENT SPECIFICATION

(11) **EP 2 831 600 B1**
(45) Date of publication and mention of the grant of the patent: **19.07.2017**
(21) Application number: 13768794.3
(22) Date of filing: 13.03.2013
(51) Int. Cl.: G01Q 30/02, G01N 3/42, G02B 21/24

(54) **MICROSCOPE OBJECTIVE MECHANICAL TESTING INSTRUMENT**
MECHANISCHES TESTINSTRUMENT FÜR EIN MIKROSKOPOBJEKTIV
INSTRUMENT D'ESSAI MÉCANIQUE D'OBJECTIF DE MICROSCOPE

(30) Priority: 27.03.2012 US 201261616259 P
(43) Date of publication of application: 04.02.2015
(73) Proprietor: Hysitron, Inc., Eden Prairie, Minnesota 55344 (US)
(72) Inventor: ASIF, Syed Amanulla Syed, Bloomington, Minnesota 55431 (US); DAMA, Rajiv, Chanhassen, Minnesota 55317 (US); MAJOR, Ryan, Plymouth, Minnesota 55442 (US)
(74) Representative: Pfenning, Meinig & Partner mbB
(86) International application number: PCT/US2013/030918
(87) International publication number: WO 2013/148204

(56) References cited:
- DE-A1- 4 012 770
- JP-A- 2004 198 293
- JP-A- 2004 271 352
- US-A- 3 564 908
- US-A- 5 952 657
- US-A- 5 983 712
- US-A1- 2008 149 832
- US-A1- 2009 088 342
- US-A1- 2010 128 961
- US-B2- 7 323 890
- US-B2- 7 665 349
- SARAH E. CROSS ET AL: "Nanomechanical analysis of cells from cancer patients", NATURE NANOTECHNOLOGY, vol. 2, no. 12, 1 December 2007 (2007-12-01), pages 780-783, XP055028012, ISSN: 1748-3387, DOI: 10.1038/nnano.2007.388

## Description

### CLAIM OF PRIORITY

This patent application claims the benefit of priority to U.S. Provisional Patent Application Serial Number 61/616,259, entitled "MICROSCOPE OBJECTIVE MECHANICAL TESTING INSTRUMENT," filed on March 27, 2012 (Attorney Docket No. 3110.015PRV).

### TECHNICAL FIELD

This document pertains generally, but not by way of limitation, to instruments for testing of materials at macro scales or less (e.g., less than 1 millimeter).

### BACKGROUND

Optical instruments, such as optical microscopes, include objective lenses configured to view a subject (e.g., tissue sample, material and the like) for a variety of examination purposes. In some examples, a plurality of objective lenses are housed within an objective turret of the microscope to facilitate the viewing of the subject at various magnifications or with varied viewing techniques.

Mechanical based testing instruments configured to provide quantitative measurement (as opposed to qualitative comparisons) include instruments that indent, scratch, bend, compress or apply tensile forces to subjects. Indentation, scratch, bend, tensile and compression testing at scales of microns or less are subject-deformation based methods for quantitative measurement of mechanical properties, such as elastic modulus and hardness of materials. For instance, probes are engaged with the subject and mechanically deform the subject to accurately determine one or more of the mechanical properties. Data measured with the probe are used to accurately determine the mechanical properties of the sample and one or more of the sample elastic or plastic characteristics and the associated material sample phase changes.

One example of a system for non-deformation based testing includes an atomic force microscopy system. In one example, an optical microscope is used for pre-inspection of a subject, and an atomic force microscope (AFM) integrated with the optical microscope is passed over the subject and the subject surface is scanned according to the measured deflection of an AFM cantilever. A laser is directed at the cantilever, and the reflected laser light is incident on a photodiode that accordingly detects deflection of the cantilever. The AFM cantilever deflects according to one of mechanical contact forces, van der Waals forces, capillary forces, chemical bonding, electrostatic forces, magnetic forces (see magnetic force microscope, MFM), Casimir forces, solvation forces and the like.

DE 40 12 770 A1 shows a hardness detecting microscope assembly which includes a spring-based mechanism for holding the probe, an optical system for measuring displacement of the probe, and an independent transducer stage which moves the sample up and down toward the probe. All these elements need to work together and are controlled by a controlling unit. However, the mechanism disclosed in DE 40 12 770 A1 is not an independent testing module which can be easily replaced as a whole.

JP 2004-271352 provides an indentation-type hardness meter capable of accurately measuring the hardness even for a material for which it is hard to recognize the contour of a dent or impossible to recognize the accurate contour of the dent, such as plastics or the like. The indentation-type hardness meter is provided with an imaging means for taking the image of the dent formed on the surface of a sample and an imaging processing means for extracting two ridgeline marks appearing in the dent of the sample so as to cross each other using the output from the imaging means and calculating the position data of the respective end points of them.

One example of hardness tester including a microscope assesses hardness through the indentation of the subject with an indentation instrument followed by examination of an indentation impression with an optical microscope. The second step of examination and measurement of the indentation impression with the optical microscope are used to assess the subject.

### OVERVIEW

The invention is defined by the claims. The following embodiments and examples highlight different aspects helpful for understanding the invention.

The present inventors have recognized, among other things, that a problem to be solved can include the need to quantitatively (and optionally qualitatively) test and observe a test location of a sample within an optical microscope (e.g., material samples including biological samples viewed with a microscope objective lens). In an example, the present subject matter can provide a solution to this problem, such as by a microscope assembly including an objective turret movably coupled with the microscope body, and an optical instrument and an objective testing module both coupled with the objective turret. The optical instrument is used to identify a test location of interest, and optionally determine material characteristics through observation (e.g., optical measurement). A mechanical testing assembly included in the objective testing module is configured to mechanically test the sample at the desired location at a macro scale or less and quantitatively determine one or more properties of the sample at the test location.

In contrast to qualitative testing methods (observation as opposed to accurate measurement), including for instance atomic force microscopy, the microscope assembly (or an objective testing module configured for use with a microscope) provides accurate quantitative measurements and determination of mechanical properties of a sample through sample-deformation based techniques.

Further, the present inventors have recognized that a problem to be solved can include the need to quantitatively test a sample and determine the properties of the sample in-situ with a unitary instrument, in contrast to testing with a first instrument and examining the test location (post-situ) with a second instrument, such as a microscope objective, at a second later time. Examination of deformation after a testing procedure allows the sample to relax (e.g., elastically) and accordingly frustrates the accurate determination of properties of the sample. In an example, the present subject matter can provide a solution to this problem with a microscope assembly and method for using the assembly that locates (e.g., identifies) a test location with an optical instrument. The objective testing module (including a mechanical testing assembly) of the microscope assembly is then used to test the sample at the test location and quantitatively determine one or more properties of the sample without requiring further cooperation with the microscope optical instrument.

Additionally, this disclosure allows for mechanical testing of samples (at macro scales or less (i.e., one or more of scales of 1 mm or less, scales of microns or less, or scales of nanometers or less) using probes on a microscope thereby allowing for a variety of optical techniques to characterize the sample prior to, during or after the mechanical testing of the sample. An operator is able to analyze samples using various optical techniques at one or more times prior to, during or after mechanical testing using the objective mechanical test module on the optical microscope. This objective mechanical test module is optionally mounted on various optical microscopes capable of varied optical examination techniques including, but not limited to, Differential Interference Contrast, Circular Polarized Imaging, Fluorescence, Bright Field, ConFocal, and Raman.

This overview is intended to provide an overview of subject matter of the disclosure. It is not intended to provide an exclusive or exhaustive explanation of the invention. The detailed description is included to provide further information about the present disclosure.

### BRIEF DESCRIPTION OF THE DRAWINGS

- Figure 1: is a perspective view of one example of a microscope assembly including an objective testing module.
- Figure 2A: is a schematic view of the microscope assembly of Figure 1 in an observation configuration with an optical instrument aligned with a sample.
- Figure 2B: is a schematic view of the microscope assembly of Figure 1 in at testing and assessment configuration with a mechanical testing assembly of the objective testing module aligned with the sample.
- Figure 3A: is a perspective view of one example of an objective testing module coupled with an objective turret.
- Figure 3B: is a perspective view of the objective testing module of Figure 3A showing one example of first and second actuators.
- Figure 4: is a schematic view of one example of a mechanical testing assembly of the objective testing module.
- Figure 5: is a schematic view of another example of a mechanical testing assembly including transverse translational axes for a probe.
- Figure 6: is a cross sectional view of the objective testing module of Figures 3A, B showing one example of a first actuator.
- Figure 7: is a schematic view showing of another example of a microscope assembly including an optical instrument in a first orientation and the objective testing module in a second orientation.
- Figure 8: is a block diagram showing one example of a method of testing a sample.

### DETAILED DESCRIPTION

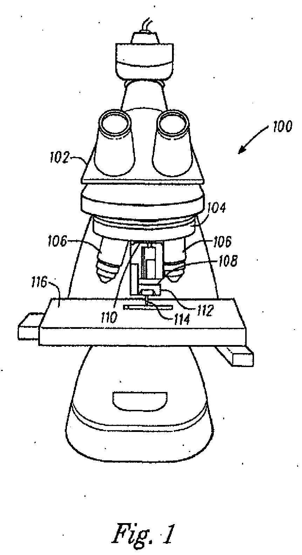

Figure 1 shows one example of a microscope assembly 100 including an objective testing module 108 coupled within an objective turret 104, such as a movable objective turret 104. In the example shown in Figure 1 the microscope assembly 100 includes an optical microscope. In another example, the microscope assembly 100 includes, but is not limited to, a scanning tunneling microscope or tunneling spectroscope. The microscope assembly 100 includes a microscope body 102 coupled with the movable objective turret 104. Rotation of the objective turret 104 accordingly positions one or more optical instruments 106 and the objective testing module 108 relative to a sample, for instance positioned on a sample stage 116. The optical instruments 106 provide a variety of lenses (in the case of an optical microscope) with accordingly different magnifications and optical capabilities to allow for viewing and optical characterization of the sample on the sample stage 116 with various degrees of magnification. In another example, where the microscope assembly 100 includes any of the previously described microscopes, for instance a non-optical microscope such as a scanning tunneling microscope or tunneling spectroscope, the objective turret 104 includes one or more instruments thereon configured to perform one or more of scanning tunneling microscopy or tunneling spectroscopy accordingly.

As further shown in Figure 1, the objective testing module 108 is coupled with the objective turret 104. The objective testing module 108 includes a module base 110 sized and shaped to fit within a corresponding socket of the objective turret 104. That is to say, in one example, the module base 110 includes a proximal end sized and shaped to engage with the corresponding mechanical interfitting features of the socket of an objective turret 104. In another example, an intervening adaptor is provided to the module base 110 that accordingly facilitates the coupling of the objective testing module 108 with one or more objective turrets 104 according to the configuration of the adaptor.

Referring again to Figure 1, the objective testing module 108 includes a mechanical testing assembly 112 coupled with the module base 110. In the example shown the mechanical testing assembly 112 includes a probe 114 sized and shaped to engage with a sample positioned on the sample stage 116. The mechanical testing assembly 112 tests the sample thereon. The mechanical testing assembly 112 is configured to conduct one or more testing procedures, including but not limited to, indentation testing, scratch testing, compression testing, dynamic mechanical testing, electrical characteristic testing, scanning probe microscopy (SPM mapping), surface force characterization, adhesive force testing or the like. The mechanical testing assembly 112 is further configured to conduct mechanical deformation based testing at one or more scales, for instance a macro scale or less (e.g., having indentation or scratch depths of 1 mm or less). In another example, the mechanical testing assembly 112 is configured to conduct mechanical deformation based testing at a micron scale (e.g., 0.5 millimeters or less) or at a nano scale (e.g., 500 nanometers or less). As described herein, the mechanical testing assembly consolidates the testing procedure with quantitative assessment and determination of the mechanical properties of the sample under consideration (in contrast to providing qualitative results or requiring subsequent observation with the optical instrument to determine a characteristic).

Optionally, one or both of the probe 114 and the sample stage 116 are heated (or cooled) and are accordingly able to test a sample at elevated (or decreased) temperatures. For instance, either or both of the probe 114 and the sample stage 116 include heating elements (such as resistive heating elements) adjacent to a probe tip or potted within the sample stage. The heating elements correspondingly heat the probe 114, the stage 116 and a sample on the stage. In another example, either or both of the probe 114 and the sample stage 116 are cooled, for instance with fluid based cooling systems. Accordingly, each of the probe 114, the stage 116 and a sample on the stage are used in one example, for testing at decreased temperatures. In still another example, the heating (or cooling) systems associated with the probe 114 and the stage 116 are operated by a controller, such as the controller 202 described herein. The controller ensures that the probe 114 and the stage 116 (as well as a sample thereon) are maintained at desired temperatures for a testing procedure. In yet another example, a sample is immersed in a heated or cool aqueous fluid that accordingly heats or cools the sample. Optionally, the probe 114 is suspended within the solution prior to testing to accordingly heat or cool the probe 114 to a substantially same temperature.

In one example, and as will be described herein the optical instruments 106 also coupled with the objective turret 104 are used to ascertain a test location on the sample (and optionally one or more optically determined properties) and the objective turret 104 is thereafter rotated to align the probe 114 of the mechanical testing assembly 112 substantially with the sample at the test location. In another example, one or more actuators provided with the objective testing module 108 are used to further align the probe 114 with the desired test location determined with the optical instrument 106. The mechanical testing assembly 112 is thereafter operated to accordingly engage the probe 114 with the sample and mechanically test (e.g., indent, scratch, SPM or the like) the sample. In still another example the mechanical testing assembly 112 is indexed relative to the optical instruments 106 (one or more of the optical instruments 106). Stated another way after determination of an appropriate test location with the optical instruments 106 as the objective turret 104 turns and accordingly moves the objective testing module 108 over the sample the mechanical testing assembly for instance the probe 114 is automatically aligned by virtue of the indexing between the optical instrument 106 and the probe 114 with the sample lying thereunder. Accordingly the probe 114 is aligned with the test location determined by the optical instrument 106 and is configured to accordingly immediately begin mechanical testing of the sample at the test location directly under the probe 114.

In one example, the mechanical testing assembly 112 including the probe 114 is a deformation based mechanical testing assembly configured to engage the sample with the probe 114, deform the sample, and measure one or more of force or displacement of the probe within the sample. The measured force, displacement, and corresponding area of the mechanical testing procedure is used with the mechanical testing assembly 112 to assess and determine various properties of the sample including, but not limited to, elastic modulus, hardness and the like. The microscope assembly 100 including the objective testing module 108 provides a system that facilitates the ready determination of a test location on a sample with one or more of the optical instruments 106. The mechanical testing assembly 112 incorporated with the objective testing module 108 thereafter provides a consolidated assembly configured to test the test location found with the optical instrument 106 and accordingly determine one or more properties of the sample. That is to say, the mechanical testing assembly 112 consolidates both of mechanical testing as well as assessment of the sample according to the testing procedure. The mechanical testing assembly 112 (e.g., a controller associated with the mechanical testing assembly) accordingly includes one or more of algorithms, mathematical equations and the like that correspondingly interpret the measurements taken with the mechanical testing assembly 112 into one or more mechanical characteristics or properties of the sample under consideration. Subsequent viewing of the sample with the optical instruments 106, while optional, is not required to determine the one or more mechanical properties of the sample. Instead, the mechanical testing assembly 112 provides both functions of testing as well as the determination of properties according to the measurements taken during the testing procedure with the mechanical testing assembly 112. In addition, by optically viewing the deformation, one or more quantitative or qualitative optically determined characteristics may be ascertained.

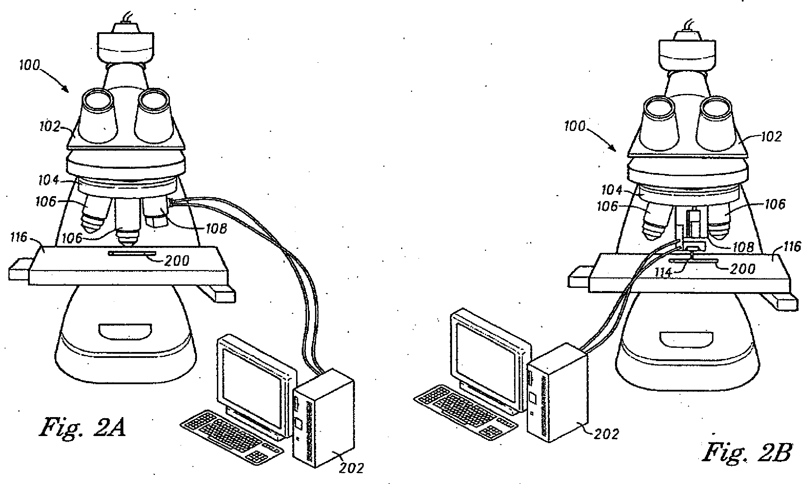

Figures 2A and 2B show two separate views of the microscope assembly 100 previously shown in Figure 1. As further shown in the Figures a controller 202 is coupled with the objective testing module 108. The controller 202, in one example, includes a property assessment module therein. The property assessment module of the controller 202 is configured to interpret measurement data obtained through the mechanical testing assembly 112 as the testing assembly conducts one or more testing procedures on a sample. The controller 202 interprets the measurement data through the application of one or more stored equations, algorithms, measurement interpretation schemes or the like. Accordingly, the controller 202 incorporated with the objective testing module 108 assesses the measurement data and generates one or more properties of the sample 200 (e.g., mechanical characteristics).

Referring to Figure 2A, one of the optical instruments 106 is shown in substantial alignment with the sample 200 positioned on the sample stage 116. In this orientation, the optical instrument 106 observes the sample 200 and locates a test location on the sample 200. Additionally, the optical instrument optionally determines one or more characteristics capable of determination by way of observation with the instrument 106. In cooperation with the controller 202 the optical instrument optionally indexes the test location. In another option, an image of the test location (as well as any other optically determinable properties) is taken and stored through the optical instrument for eventual comparison to a post testing image of the test location. In another example and as previously described herein, the optical instrument 106 is indexed relative to the objective testing module 108. Accordingly, as the objective turret 104 is rotated to align the objective testing module 108 with the sample 200 (including a test location on the sample) the objective testing module 108 is accordingly automatically aligned with the test location found with the optical instrument 106.

Referring now to Figure 2B, the microscope assembly 100 of Figure 2A is shown in a second orientation with the objective turret 104 rotated. As shown in this rotated position the objective testing module 108 is aligned with the sample 200. That is to say, the probe 114 is positioned above a test location such as the test location determined with the optical instrument 106. In this configuration the objective testing module 108 including the mechanical testing assembly 112 is ready to conduct a mechanical testing procedure (or procedures) on the sample at the test location. The controller 202, in one example, provides the instructions to the mechanical testing assembly 112 that accordingly operate one or more transducers coupled with the probe 114. The probe 114 is advanced and engaged with the sample 200, for instance at the test location, and accordingly deforms the sample at the test location to determine one or more of force applied, displacement, area of contact or the like with the sample 200.

As previously described, the controller 202 as part of the objective testing module 108 (e.g., in communication with the mechanical testing assembly 112) is configured to interpret measurement data generated by the mechanical testing assembly 112 and accordingly determine one or more mechanical properties or characteristics of the sample 200. For instance, as previously described the mechanical testing assembly 112 including the probe 114 is, in one example, a deformation based instrument. Engagement of the probe 114 with the sample correspondingly provides an indentation, scratch or the like (e.g., a deformation) in the sample 200. The mechanical testing assembly 112 measures the force of engagement against the sample 200 as well as the displacement of the probe 114 while engaged with the sample 200 (and optionally through one or more models or equations the area of contact between the probe and the sample). The controller 202 including for instance a property assessment module is in communication with the mechanical testing assembly 112 and forms a portion of the objective testing module 108. Accordingly the controller 202 is configured to interpret the measurements taken by the mechanical testing assembly 112 and determine one or more mechanical properties or characteristics of the sample 200 under consideration (e.g., properties of the test location of the sample under consideration).

Accordingly, with the system shown in Figures 2A and 2B between each of the two configurations the microscope assembly 100 is able to determine a test location (e.g., as shown in Figure 2A), optionally optically characterize it, and thereafter in the second orientation (Figure 2B) measure and determine one or more mechanical properties of the sample with the objective testing module 108 aligned with the sample 200. Stated another way, the mechanical testing assembly 112 is configured to measure and determine one or more mechanical properties of the sample 200 without further observation of the optical instruments 106. In another example, the objective turret 104 is rotated again to align one or more of the optical instruments 106 with the sample 200 for instance at the test location previously determined with the optical instrument 106 as shown in Figure 2A. In this third configuration the optical instrument 106 is used to observe the test location including any deformation at the test location. Accordingly the technician is able to observe the test location (before and) after the testing procedure and assess any qualitative data about the test location while the controller 202 is configured to determine one or more quantitative characteristics of the sample 200 for instance hardness, elastic modulus and the like.

As previously described herein the objective testing module 108 includes a mechanical testing assembly 112. The mechanical testing assembly 112 of the objective testing module 108 is configured to conduct quantitative testing and analysis of one or more characteristics of the sample 200 under consideration. For instance, with the probe 114 engaging and deforming the sample 200 according to a testing procedure the objective testing module 108 including the mechanical testing assembly 112 is determines one or more quantitative (as opposed to qualitative) properties of the sample under consideration. Stated another way, the microscope assembly 100 including the objective testing module 108 is able to quantitatively determine one or more characteristics of a sample (e.g., mechanical properties) in a consolidated assembly of the objective testing module 108 including the mechanical testing assembly 112 tests and determines properties of the sample 200.

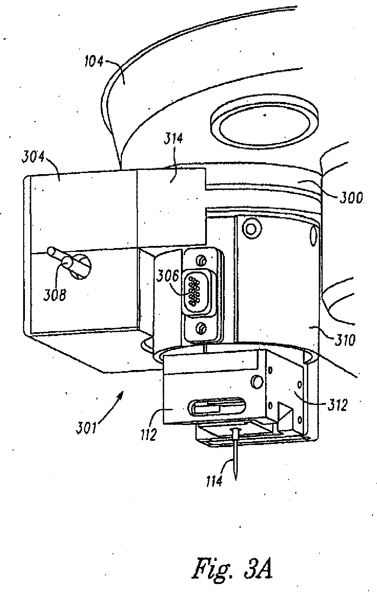

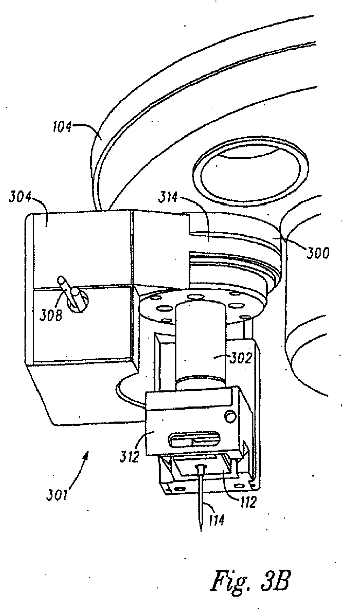

Figures 3A and 3B show two perspective views of another example of an objective testing module 301. In the example shown in Figures 3A and 3B the objective testing module 301 includes one or more actuators configured to move the mechanical testing assembly 112, for instance into alignment with a portion of the sample on a sample stage such as the stage 116 shown in Figure 1. In another example the one or more actuators provided with the objective testing module 301 are configured to move the probe 114 to approach a test location on a sample. That is to say, the actuators provide one or more of gross or fine movement to position the probe 114 in close proximity to the sample prior to testing. Optionally, the actuators provide actuation in the form of displacement (e.g., engagement and deformation based contact) of the probe 114 relative to the sample for a testing procedure such as indenting, scratching, compressing, applying tensile forces or the like to the sample.

Referring first to Figure 3A, the objective testing module 301 is shown to the objective turret 104 with a module base 300 sized and shaped for reception within an objective socket of the objective turret 104. As further shown in Figure 3A the mechanical testing assembly 112 is optionally retained within an instrument housing 312 sized and shaped to retain one or more transducers and the probe 114 therein. The transducers as will be described herein are coupled with the probe 114 and configured to conduct one or more testing procedures through moving and measuring movement of the probe 114 and force applied by the probe 114 to the sample. Optionally, the instrument housing 312 is sized and shaped to retain multiple transducers coupled directly or indirectly with the probe 114. For instance, in one example, a first transducer is operable to provide one or more of translation or lateral movement to the probe 114 while a second transducer is configured to measure the corresponding movement of the probe 114 (and force applied) for instance during engagement with the sample. In another example, a plurality of transducers are supplied and each of the transducers is configured to provide movement to the probe 114 in one or more directions for instance along a z axis, x axis, y axis or the like. In yet another example, the transducers associated with the probe 114 are configured to provide both translation and measurements of one or more of movement and force applied by the probe 114 to a sample provided on the sample stage (see the sample stage 116 shown in Figure 1).

Referring now to Figure 3B a plurality of actuators are provided in the example objective testing module 301. For instance, in Figure 3B a first actuator 302 is coupled between the instrument housing 312 and the module base 300. The first actuator 302 is coupled between the instrument housing 312 of the mechanical testing assembly 112 and an optional second actuator 304. In one example, the first actuator 302 provides a single axis of movement, for instance elevation of the instrument housing 312 (and the probe 114) relative to the objective turret 104 and the module base 300. The first actuator includes, but is not limited to, one or more piezo actuators providing a range of movement along a z axis less than or equal to about 100 microns. In another example, the first actuator 302 includes a plurality of actuators (e.g., the first actuator 302 is an assembly of actuators). The plurality of actuators are nested as tubes or stacked one on top of the other. Optionally, a second actuator of the first actuator 302 is a lateral actuator, for instance a supplemental piezo actuator, configured to provide movement (along one or more of x or y axes) to the instrument housing 312 and accordingly the probe 114. The optional lateral actuator provides a range of motion, for instance less than or equal to about 80 microns.

Referring to Figure 3A a first actuator interface 306 is shown extending through an enclosure 310. In one example, the enclosure 310 is associated with the module base 300. In another example, the enclosure 310 is associated with and coupled with a carriage of the second actuator 304. The enclosure 310 includes a first actuator interface 306 and the first actuator interface 306 provides wiring access to the first actuator 302 coupled between the module base 300 and the instrument housing 312. For instance, as shown in Figure 3A the first actuator interface 306 provides a plug shaped interface configured to couple with a corresponding cable and the cable is coupled with a control assembly such as the controller 202 shown in Figures 2A and 2B. In another example, the first actuator interface 306 provides communication with the mechanical testing assembly 112. That is to say the first actuator interface 306 provides control and communication between a controller and the mechanical testing assembly 112. In still another example, the mechanical testing assembly 112 is separately connected with the controller 202, for instance with a dedicated wiring bundle extending from one or more of the transducers associated with the probe 114.

Referring now to Figure 3A the second actuator 304 is shown coupled between the module base 300 and the mechanical testing assembly 112. As further shown in Figure 3B, the second actuator 304 is coupled between the module base 300 and an actuator flange 316 of the first actuator 302. That is to say, the second actuator 304 is optionally coupled between the module base 300 of the objective testing module 301 and the actuator 302. Accordingly a linkage or chain of actuators is optionally provided between the module base 300 and the mechanical testing assembly 112 to accordingly provide a range of varied translation, for instance one or more of single axis or multiple axis movement or gross and fine movement (with the differing resolutions provided between by the respective actuators).

As further shown in Figure 3A the second actuator 304 includes an actuator carriage 314 movably coupled with the module base 300. The actuator carriage 314 is movable along a z axis, for instance an axis aligned with the probe 114. That is to say, the actuator carriage 314 is movable by way of an interposing actuator element, such as a piezo element, voice coil element or the like provided between the module base 300 and the actuator carriage 314. In one example, the second actuator 304 is configured to have a gross range of movement, for instance a range of movement less than or equal to one millimeter. That is to say, the second actuator 304 in one example, provides a larger range of movement relative to the first actuator 302 (optionally having a range of movement on the order of 100 microns or less). The transducers associated with the mechanical testing assembly 112 of the objective testing module 301 have a range of motion, for instance, of less than or equal to 100 microns in one or more axes such as the z axis parallel to the probe 114 or one or more x or y lateral axes. In still another example, the second actuator 304 is configured to provide one or more axes of translation, for instance the second actuator 304 moves along the z axis as well as one or more x or y lateral axes.

In another example, the module base 300 is part of the second actuator 304. For instance, the module base 300 is a base portion of the second actuator 304 and the actuator carriage 314 is movably coupled with the module base by way of an intervening actuating mechanism, such as a piezo actuator therebetween. Accordingly, the objective testing module 301 as shown in Figures 3A, B includes a chain of actuators (e.g., the first and second actuators 302, 304) connected in series as described herein. The first and second actuators 302, 304 are cooperatively used, in one example, to provide movement for the mechanical testing assembly 112, for instance to position the probe 114 as desired with regard to a test location. In another example, one or more of the actuators 302, 304 is used to provide the actuation movement (e.g., indentation, scratching or other force) for the probe 114 to facilitate engagement and corresponding testing with the sample. In still another example, a combination of one or more of the actuators 302, 304 and the transducers associated with the mechanical testing assembly 112 are used to provide the actuation force for the probe 114 during testing.

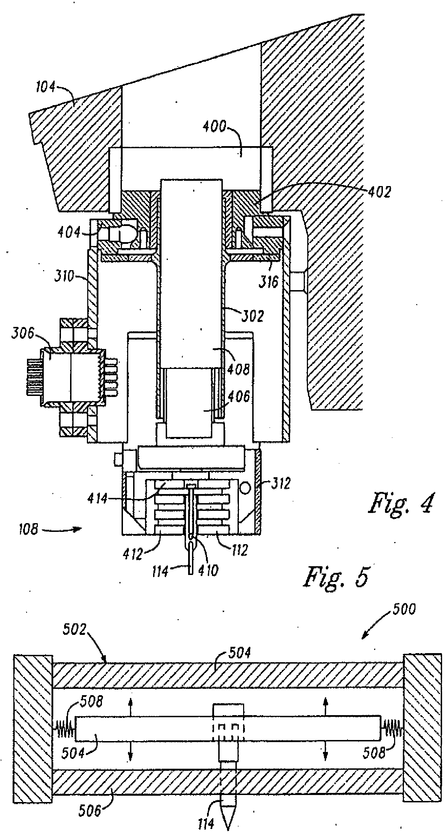

Referring now to Figure 4, a cross-sectional view of the objective testing module 108 previously shown in Figure 1 is provided. In this example the second actuator 304 is removed and the first actuator 302 is coupled between a module base 110 and the mechanical testing assembly 112. As shown in Figure 4, the first actuator 302 in this example includes first and second component actuators 406, 408 (e.g., one or more piezo actuators). In the exemplary arrangement shown the first component actuator 406 is coupled with the instrument housing 312 and the second component actuator 408 is coupled with the first component actuator 406 and the first actuator flange 316. Optionally, the first and second component actuators are reversed from this configuration or provided in another configuration, for instance with the first component actuator 406 nested within the second component actuator 408.

In the example shown in Figure 4, the first component actuator 406 provides movement for the objective testing module (e.g., the mechanical testing assembly 112) along a z axis. As previously described, in one example, movement of the first actuator, (e.g., the first component actuator 406) facilitates the approach of the probe 114 toward a test location of the sample 200 (e.g., Figures 2A, B). In another example, the first component actuator 406 provides actuation for the probe 114 during a testing procedure to provide engagement and deformation of a sample with the probe 114. Accordingly one or more transducers associated with the instrument housing 312 measure one or more of the resulting force or displacement corresponding to the movement of the probe 114 relative to one or more of the transducers provided within the instrument housing 312.

In another example, the first actuator 302 includes the second component actuator 408. The second component actuator 408 optionally provides lateral movement to the mechanical testing assembly 112, for instance in a direction transverse to the direction of movement provided by the first component actuator 406. In one example, the second component actuator 408 provides one or more of movement of the mechanical testing assembly 112 along an x or y axis.

Referring again to Figure 4, in one example, an adaptor 402 is provided within an objective socket 400. The objective socket 400 is the orifice of the objective turret 104 sized and shaped to receive an optical instrument such as an optical objective therein (and the objective testing modules described herein). In one example, the objective testing module 108 is sized and shaped for use within a variety of objective sockets including the objective socket 400. In such an example an adaptor 402 is optionally provided. The adaptor 402 (or a plurality of adaptors) is configured to facilitate the coupling of the objective testing module 108 between a plurality of objective sockets including for instance the objective socket 400. In one example, the module base 110 includes a fitting or other mechanical feature sized and shaped to engage with one portion of the adaptor 402 while the opposed portion of the adaptor is sized and shaped for reception within the objective socket 400 and fixation therein. For instance, in one example, the module base 110 includes a clamp mechanism having a beveled face and one or more positioning features such as a set screw sized and shaped to tightly engage a tongue and groove surface of the module base 110 (e.g., a bevel) within corresponding bevels of the adaptor 402.

As further shown in Figure 4, in one example, the instrument housing 312 of the mechanical testing assembly 112 includes a plurality of transducers therein. For instance in the example shown in Figure 4, a first transducer 412 is provided adjacent to a second transducer 414. As previously described, in one example, the first and second transducers 412, 414 are used cooperatively. That is to say one, of the first or second transducers 412, 414 provides actuation used to move the probe 114 into engagement and conduct one or more mechanical tests on a sample such as the sample 200. The other of the first and second transducers 412, 414 is used to measure one or more of the corresponding displacement of the probe 114 as well as the force applied by the probe 114 during its engagement with the sample. In still another example, one or both of the first and second transducers 412, 414 provide an actuation force as well as the sensing function to measure the corresponding displacement and force of the probe 114 when engaged with the sample. As shown in Figure 4 the probe 114 includes a coupling shaft 410 sized and shaped for coupling with the first and second transducers 412, 414. For instance the coupling shaft 410 extends through orifices of each of the center plates of the first and second transducers 412, 414 and is coupled with the center plates with one or more interference fittings, mechanical bonds or the like.

Referring now to Figure 5, one schematic example of the transducer assembly 500 is provided (e.g. for use as one of the transducers 412, 414 described herein). The transducer assembly 500 shown in Figure 5 includes a capacitor assembly 502 having opposed plates 504 positioned around a center plate 506. In one example, the capacitor assembly 402 operates in an electrostatic manner to move a center plate 506 relative to opposed plates 504. For instance, the opposed plates 504 provide an electrostatic force to the center plate 506 that provides one or more of indentation or scratching movement of the probe 114 (and in other examples compressive or tensile forces) relative to a sample, such as the sample 200 shown in Figures 2A, B.

As shown in the diagram the center plate 506 is movable relative to the opposed plates 504. For instance, the center plate 506 is coupled with the remainder of the capacitor assembly 502 with one or more spring supports 508. The application of a voltage across the opposed plates 504 actuates the center plate 506 to move the probe 114 for indentation (e.g., along the z-axis) or translation (e.g., along the x- and y-axes). Similarly, movement of the center plate 506 relative to the opposed plates 504 is measurable according to changes in capacitance, changes in the voltage across the opposed plates 504 or the like. Measurement of the change in capacitance and change in voltage is readily associated with one or more of the change in position of the probe 114 or force applied by the probe. From these measurements forces applied by the probe 114 as well as movement of the probe 114 are readily determined with precision.

Optionally, where the mechanical testing assembly 112 includes a plurality of transducers, for instance first and second transducers 412, 414, the probe 114 is coupled with each center plate of the transducers. For instance, the coupling shaft 410 (shown in Figure 4) has a tapering diameter or staggered diameter, and portions of the coupling shaft 410 are fixed within the orifices of the center plates having corresponding diameters.

As previously described in some examples, the actuator, such as one or both of the first and second actuators 302, 304 provides actuation including scratching movement, indentation movement or the like with the probe 114 relative to the sample. The transducer 500 is used in this passive or substantially passive manner to measure the movement of the probe 114 (e.g., by movement of the center plate 506) relative to the opposed plates 504. For example, in a passive mode the center plate 506 is held between the opposed plates 504 with the spring supports 508. As the actuator 302 or 304 moves the probe 114, for instance indents the probe 702 or scratches the probe 702 across or into a sample, the deflection of the center plate 506 relative to the opposed plates 504 is measured to thereby determine the force incident on (e.g., applied by) the probe 114 as well as its movement.

In yet another example, the center plate 506 is held at a substantially static position relative to the opposed plates 504 with an electrostatic force. In this example, one or more of the actuators 302, 304 are operated to move the probe 114, for instance indenting or scratching the probe 114 into or along the sample 200, and the voltage required to maintain the center plate 506 in position relative to the opposed plates 504 is measured to determine the force incident on the probe 114 corresponding to the force applied to the sample. The movement of the actuator 302, 304 is used to correspondingly measure the actuator based movement of the probe 114.

Optionally, the transducer 500 (e.g., corresponding to one or more of the transducers 412, 414) is configured to conduct dynamic mechanical testing. For instance, the probe 114 applies a dual component force to a sample, such as the sample 200 shown in Figures 2A and 2B. One component of the force is a quasi-static force corresponding to, for instance, a constant voltage applied across opposed plates 504. Another component of the actuation force corresponds to an oscillatory force provided by an oscillating voltage applied across the opposing plates 504 in combination with the quasi-static force. The oscillatory force oscillates the probe 114, and the resulting force and displacement are measured. Dynamic mechanical testing is used, in one example, with materials having low moduli of elasticity (e.g., that readily deform when a static force or displacement is applied). The resulting electrical signal provided by the center plate 506 is interpreted to measure the corresponding displacement and force applied by the probe 114 (and with the controller 202 of the objecting testing module) determine one or more characteristics of the sample.

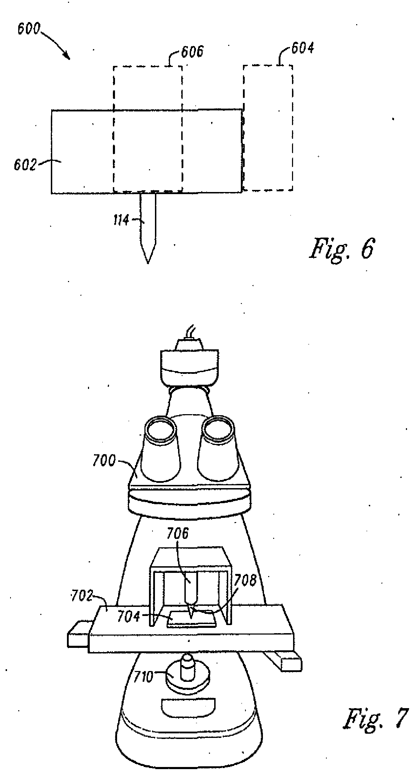

Figure 6 shows one example of a multi-axis transducer assembly 600 for use with either of the mechanical testing assemblies 112 of the objective testing modules 108, 301 described herein. As previously described, in one example, the mechanical testing assembly 112 includes a plurality of transducers. In the example shown in Figure 6, the multi-axis transducer assembly 600 uses a plurality of transducers 602, 604, 606 to provide actuation and sensing of movement of the probe 114 in one or more directions for instance along the component x, y and z axes. The component z transducer 602 is shown coupled with the probe 114. In one example, the component z transducer 602 has a configuration substantially similar to the transducer assembly 500 previously shown in Figure 5 and shown in the cross-sectional view of Figure 4. That is to say, in one example, the component z transducer 602 has a capacitor assembly 502 including a center plate 506 sized and shaped to move the probe 114 in a vertical fashion (e.g., along a z axis).

As further shown in Figure 6, optional component transducers 604, 606 corresponding to the x and y axes are provided. For instance, where the multi-axis transducer assembly 600 includes a component x transducer 604 coupled with a housing of the component z transducer 602, the probe 114 is correspondingly moved to the left or right relative to the orientation of the page by operation of the component transducer. Similarly, lateral movement of the probe 114 for instance from the left to the right is optionally measured with the component x transducer 604. In another example, a component y transducer 606 is provided with the multi-axis transducer assembly 600. The component y transducer 606 is configured to provide actuation of the instrument probe 114, for instance in directions in and out of the page as oriented in Figure 6. That is to say, the component y transducer 606 in one example, provides lateral movement to the probe 114 in a direction substantially transverse to that provided by the component x transducer 604. In a similar manner the component x transducer 604 and the component y transducer 606 are configured to measure lateral movement of the probe 114, for instance with center plates that are moved relative to opposed plates of a capacitor assembly in the manner of the capacitor assembly 502 (described above).

Accordingly, with the multi-axis transducer assembly 600 positioned within the instrument housing 312 of the mechanical testing assembly 112 the objective testing module 108 (or 301) is configured to provide movement of the probe 114 along one or more axes and sense movement of the probe 114 (and the force applied by the probe) along one or more axes according to sensing provided by one or more of the component transducers 602, 604, 606. The multi-axis transducer assembly 600 is in one example, configured to provide one or more of indentation actuation, scratching actuation, compression and tensile actuation and the like.

Figure 7 is a schematic view of another microscope assembly 700. The configuration shown in Figure 7 allows for in-situ observation of a sample 704 while observation is conducted for instance with an optical instrument 710. A sample 704 is positioned on a sample stage 702 that facilitates viewing with the optical instrument 710. An objective testing module 706 including a probe 708 is positioned above the sample 704 and aligned to facilitate engagement of the probe 708 with a test location. As shown in Figure 7 each of the objective testing module 706 and the optical instrument 710 have differing orientations facing the sample 704. The differing orientations facilitate the contemporaneous viewing and testing of the sample 704. For instance, in one example, the sample 704 is suspended by the sample stage 702 on a transparent surface, cantilevered beam or the like. In another example the sample 704 is immersed in a bath for instance a bath of water, nutrient fluid, gels, liquids, liquid-gas combinations, semisolids, colloids, emulsions, biological material or the like (e.g., for a biological sample). By providing the optical instrument 710 in a first orientation (e.g., directed upwardly) and the objective testing module 706 in a second orientation (e.g., directed downwardly) both of the optical instrument 710 and the objective testing module 706 are able to access or view the sample 704 during a testing procedure. For instance, as the sample 704 is tested with the objective testing module 706 with one or more testing procedures (e.g., indentation, scratching, compression, tensile testing or the like) the optical instrument 710 views the sample 704 and accordingly observes the sample during the testing 704 procedure.

Accordingly, with the optical instrument 710 in a first orientation and the objective testing module 706 in a second orientation both directed toward the sample 704 in-situ observation of a sample 704 during a mechanical testing procedure is realized. That is to say, with the sample 704 observed from a first angle provided by the optical instrument 710 and testing at a second angle with the objective testing module 706 the sample 704 is mechanically tested and observed to see the instantaneous deformation of the sample 704.

In still another example, the objective testing module 706 and the optical instrument 710 are coupled with an objective turret in a similar manner to the objective turret 104 previously described herein (for the modules 108, 301). For instance, the objective testing module 706 is installed at an angle in the objective turret 104 and an axis of the probe 708 is coincident with a viewing axis of the optical instrument 710. Accordingly, with both the objective testing module 706 and the optical instrument 710 provided on an objective turret each of the module 706 and the instrument 710 are able to test and observe a sample.

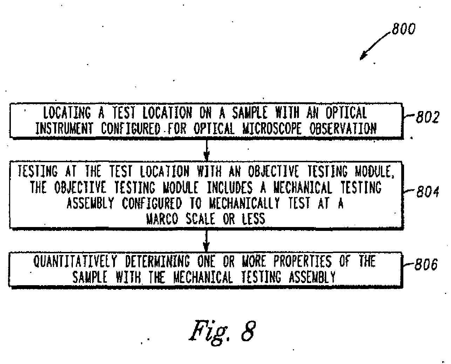

Figure 8 shows one example of a method 800 for testing a sample for instance with an objective testing module (108, 301) coupled within a microscope assembly, such as the microscope assembly 100 shown in Figure 1. In describing the method 800, reference is made to one or more components, features or the like described herein. Where convenient reference is made with reference numerals. The reference numerals provided are exemplary and are not exclusive, for instance the features, components or the like described in the method 800 include but are not limited to the corresponding numbered elements, other corresponding features described herein (both numbered and unnumbered) as well as their equivalents.

At 802, the method 800 includes locating a test location on a sample such as the sample 200 with an optical instrument 106 configured for optical microscope observations. In another example locating a test location includes locating a test location with one or more scanning tunneling microscope instruments, tunneling spectroscope instruments or the like. Optionally, locating a test location on the sample 200 includes aligning the optical instrument with a desired test location on the sample 200. For instance, in one example, a sample stage such as the sample stage 116 shown in Figure 1 is movable relative to the objective turret 104 including an optical instrument 106 therein. Accordingly with movement of the sample stage 116 and the sample 200 positioned thereon the optical instrument 106 is used to align a test location with the optical instrument to facilitate alignment with the objective testing module 108 as described herein.

In another example, the optical instrument 106 is used to find a test location on a sample and the test location is thereafter indexed. The objective turret 104 is rotated and as described herein, the objective testing module 108 through one or more actuators (e.g., the actuators 302, 304 described herein) is moved to align the objective testing module 108 (for instance, the mechanical testing assembly 112 including the probe 114) with the indexed test location. Optionally, the optical instrument 106 and the objective testing module 108 (or 301) are statically positioned relative to each other. Accordingly, rotation of the objective turret 104 automatically aligns the mechanical testing assembly 112 with the observed test location.

At 804, the method 800 includes testing at the test location with an objective testing module, such as the objective testing module 108 shown in Figure 1 or the module 301 shown in Figures 3A, B. In one example, the mechanical testing assembly 112 is configured to mechanically test the sample 200 at a macroscale or less (e.g., an indentation or or deformation depth of about one millimeter or less). In another example the objective testing module 108 is configured to provide an indentation depth or deformation depth of about 0.5 millimeters or less corresponding to a micron scale testing procedure. In still another example the objective testing module 108 is configured to test with an indentation depth of deformation depth of 500 nanometers or less corresponding to a nano scale testing procedure. Accordingly, the objective testing module 108 is configured to provide mechanical tests of a sample, such as the sample 200 at macro scales or less. That is to say, the transducers associated with the mechanical testing assembly 112 and optionally one or more of the actuators such as the actuators 302, 304 are configured to cooperate and accordingly provide actuation displacements corresponding to the macro, micro and nano scales previously described herein. Similarly the transducers such as the transducers provided within the instrument housing 312 of the mechanical testing assembly 112 are correspondingly configured to measure the indentation or deformation depths from a macro scale down to a nano scale.

At 806, one or more properties of the sample 200 are quantitatively determined with the mechanical testing assembly 112. As previously described herein, in one example, the mechanical testing assembly 112 includes a controller 202 including therein a property assessment module. The controller 202 is in communication with the instruments of the mechanical testing assembly 112 such as the transducers and the probe 114 to accordingly interpret measurement data obtained with the probe 114 and the transducers therein and determine one or more characteristics of the sample 200 under consideration including but not limited to hardness, modulus of elasticity or the like.

Several options for the method 800 follow. In one example, the method 800 includes moving the objective turret 104, and the optical instrument 106 and the objective testing module 108 coupled with the objective turret are moved as the object turret is moved for instance by rotation or translation. Optionally, the objective testing module 108 is aligned with the test location determined through the optical instrument by way of movement of the objective turret. For instance the objective turret is configured to accurately move the objective testing module 108 into alignment or near alignment with the test location determined by the optical instrument 106 (see Figures 2A and 2B).

In another example, testing at the test location for instance with the objective testing module 108 having the mechanical testing assembly 112 therein includes moving a probe 114 into the sample 200 at the test location with a transducer, for instance one or more of the transducers 412, 414 shown in Figure 4. Additionally, testing at the test location includes measuring one or more of force applied at the test location with the probe 114 or displacement of the probe at the test location. That is to say, the transducers such as the transducers 412, 414 are configured to measure one or more of the displacement or force of the probe during deformation of the sample. Optionally, moving the probe 114 into the sample 200 includes moving the probe from an elevated position to at least a partially submerged position within a medium to engage the sample 200 submerged within the medium. In one example, the medium includes but is not limited to fluids such as liquids, gels, colloids, biological matter and other substances interposed between the probe 114 and the sample prior to engagement of the sample by the probe. Because the probe 114 is advanced with one or more of the actuators 302, 304 or optionally the transducers associated with the mechanical testing assembly 112 the probe is closely positioned and engaged with the sample. Accordingly, the probe 114 is not repeatedly passed through intervening substances (between the test location and the probe) and any effect provided by a medium surrounding the sample is substantially minimized. Accordingly, the transducers such as the transducers 412, 414 are able to readily transmit displacement from the probe 114 to the sample and accurately measure the corresponding displacement and force applied by the probe 114 through deformation of the sample.

In one example, the method 800 includes approaching the test location with a first actuator such as the first actuator 302 shown in Figure 3B. In one example, the first actuator 302 is coupled between a module base 300 of the objective testing module 301 and the mechanical testing assembly 112. The first actuator 302 moves the mechanical testing assembly 112 along one or more axes for instance one or more of z, x or y axes. Referring now to the example shown in Figure 4, the first actuator 302 is shown coupled between a module base 110 and the mechanical testing assembly 112. As shown the first actuator 302 includes a first component actuator 406 providing translation of the mechanical testing assembly 112 along with a z axis and an optional second component actuator 408 providing lateral movement of the mechanical testing assembly 112 (e.g., along one or more of x and y axes). As shown in the example of Figure 4, the first component actuator 406 is coupled with the mechanical testing assembly 112. In another example, the second component actuator 408 is instead coupled with the mechanical testing assembly 112 and the first component actuator 406 is coupled with the module base 110 (e.g., with the first actuator flange 316). In still another example, the first component actuator 406 is nested within the second component actuator 408. Optionally, the first component actuator 406 is sized and shaped to provide a range of motion for the mechanical testing assembly 112 of approximately 100 microns or less.

In another example, approaching the test location includes approaching the test location with a second actuator 304 shown in Figures 3A, B. The second actuator 304 is, in one example, coupled between the module base 300 of the objective testing module 301 shown in Figures 3A, B and the first actuator 302. Accordingly, the first and second actuators 302, 304, in one example, form a linkage of actuators configured to provide movement to the mechanical testing assembly 312 (optionally with different resolutions or ranges of motion). The second actuator 304 moves the mechanical testing assembly 312 along one or more axes including a z axis and optionally along an x or y axis. In one example, the second actuator 304 contrasts from the first actuator by providing a greater range of motion, for instance a range of motion of around one millimeter or less. Accordingly, the second actuator, in one example, is optionally configured to provide gross movement of the mechanical testing assembly 112 relative to more fine movement provided by the first actuator 302.

In another example, the method 800 includes in-situ observation of the test location during testing with the objective testing module. As shown for instance in Figure 7, in one example, an objective testing module 706 is oriented at a first orientation relative to a sample 704 positioned on a sample stage 702 (e.g., directed downward toward the sample). An optical instrument 710 is also directed at the sample 704 and is provided in a second orientation to view the sample 704 from below. With each of the objective testing module 706 and the optical instrument 710 directed at the sample 704 the optical instrument 710 views the sample 704 during the mechanical testing procedure performed by the objective testing module 706 (e.g., with the probe 708). In still another example testing at the test location includes electrical characteristic testing. For instance, each of the objective testing module 108 and the sample stage 116 shown for instance in Figure 1 include corresponding electrical contacts. A potential is applied across the probe 114 and the sample stage 116 while the probe is engaged with a sample provided on the stage. Electrical characteristics of the sample are accordingly measured by way of measuring the potential or other electrical property. In still another example testing at the test location includes a mechanical deformation based testing of biological or transparent materials.

In another example, testing at the test location includes dynamic mechanical testing. For instance, the probe 114 applies a dual component force to a sample, such as the sample 200 shown in Figures 2A and 2B. One component of the force is a quasi-static force corresponding to for instance a constant voltage applied across opposed plates 504 of the transducer such as the transducer assembly 500 shown in Figure 5. Another component of the actuation force corresponds to an oscillatory force provided by an oscillating voltage applied across the opposing plates 504 in combination with the quasi-static force. The oscillatory force oscillates the center plate 506 and accordingly oscillates the probe 114. The probe 114 is dynamically engaged with the sample 200 and resulting force and displacement are measured. Dynamic mechanical testing is used in one example, with materials having low moduli of elasticity (e.g., that readily deform when a static force or displacement is applied). In a similar manner to the testing methods described herein, the oscillatory movement of the probe 114 and the corresponding mechanical response (e.g., displacement and force) of the sample 200 are measured with the transducers (e.g., the transducer 500 shown in Figure 5). That is to say, the resulting electrical signal provided by the center plate 506 is interpreted to measure the corresponding displacement and force applied by the probe 114 (and with the controller 202 of the objecting testing module) determine one or more characteristics of the sample.

### Various Notes & Examples

Example 1 can include a microscope assembly comprising: a microscope body; an objective turret movably coupled with the microscope body; an optical instrument configured for optical microscope observations, the optical instrument is coupled with the objective turret; and an objective testing module coupled with the objective turret, the objective testing module includes: a module base coupled with an objective socket of the objective turret, and a mechanical testing assembly coupled with the module base, the mechanical testing assembly is configured to mechanically test a sample at a macro scale or less and quantitatively determine one or more properties of the sample.

Example 2 can include, or can optionally be combined with the subject matter of Example 1, to optionally include wherein the mechanical testing assembly includes a probe and one or more transducers coupled with the probe, the probe is movable relative to the module base, and the transducer measures one or more of force applied to a sample by the probe or displacement of the probe within the sample.

Example 3 can include, or can optionally be combined with the subject matter of one or any combination of Examples 1 or 2 to optionally include wherein at least the probe is movable between two or more positions including: an elevated position, and an at least partially submerged position, wherein the probe is partially submerged within a medium to engage a sample submerged in the medium.

Example 4 can include, or can optionally be combined with the subject matter of one or any combination of Examples 1 through 3 to optionally include a controller having a property assessment module, the controller is in communication with the mechanical testing assembly, and the property assessment module assesses the one or more properties of the sample according to mechanical testing by the mechanical testing assembly.

Example 5 can include, or can optionally be combined with the subject matter of one or any combination of Examples 1-4 to optionally include a motor coupled between the microscope body and the objective turret, the motor is configured to move the objective turret, the objective testing module and the optical instrument.

Example 6 can include, or can optionally be combined with the subject matter of Examples 1-5 to optionally include a first actuator coupled between the module base and the mechanical testing assembly, and the first actuator is configured to move the mechanical testing assembly relative to the module base.

Example 7 can include, or can optionally be combined with the subject matter of Examples 1-6 to optionally include a second actuator coupled between the module base and the first actuator, and the second actuator is configured to move the mechanical testing assembly and the first actuator relative to the objective turret.

Example 8 can include, or can optionally be combined with the subject matter of Examples 1-7 to optionally include wherein the optical instrument includes at least one objective lens.

Example 9 can include, or can optionally be combined with the subject matter of Examples 1-8 to optionally include an objective testing module configured for installation within an objective turret of an instrument, the objective testing module comprising: a module base configured for coupling with an objective socket of an objective turret of an instrument, and a mechanical testing assembly coupled with the module base, the mechanical testing assembly is configured to:
mechanically test a sample at a macro scale or less, and quantitatively determine one or more properties of the sample.

Example 10 can include, or can optionally be combined with the subject matter of Examples 1-9 to optionally include wherein the mechanical testing assembly includes a probe and one or more transducers coupled with the probe, the probe is movable relative to the module base, and the transducer measures one or more of force applied to a sample by the probe and displacement of the probe within the sample.

Example 11 can include, or can optionally be combined with the subject matter of Examples 1-10 to optionally include wherein the transducer includes one or more capacitive transducers, and each of the one or more capacitive transducers includes two or more plates.

Example 12 can include, or can optionally be combined with the subject matter of Examples 1-11 to optionally include wherein the transducer includes at least first and second capacitive transducers, and the first capacitive transducer provides translation for the probe along a z-axis, and the second capacitive transducer provides movement for the probe along a second axis transvers to the z-axis.

Example 13 can include, or can optionally be combined with the subject matter of Examples 1-12 to optionally include wherein at least the probe is movable between two or more positions including: an elevated position, and an at least partially submerged position, wherein the probe is partially submerged within a medium to engage a sample submerged in the medium.

Example 14 can include, or can optionally be combined with the subject matter of Examples 1-13 to optionally include a controller having a property assessment module, the controller is in communication with the mechanical testing assembly, and the property assessment module assesses the one or more properties of the sample according to mechanical testing by the mechanical testing assembly.

Example 15 can include, or can optionally be combined with the subject matter of Examples 1-14 to optionally include a first actuator coupled between the module base and the mechanical testing assembly, and the first actuator is configured to move the mechanical testing assembly relative to the module base.

Example 16 can include, or can optionally be combined with the subject matter of Examples 1-15 to optionally include wherein the first actuator moves the mechanical testing assembly in one or more axes, the range of motion provided by the first actuator along the one or more axes is 100 microns or less.

Example 17 can include, or can optionally be combined with the subject matter of Examples 1-16 to optionally include a second actuator coupled between the module base and the first actuator, and the second actuator is configured to move the mechanical testing assembly and the first actuator.

Example 18 can include, or can optionally be combined with the subject matter of Examples 1-17 to optionally include wherein the second actuator moves the mechanical testing assembly along one or more axes, the range of motion provided by the second actuator along the one or more axes is 1 millimeter or less.

Example 19 can include, or can optionally be combined with a method of testing a sample comprising: locating a test location on a sample with an optical instrument configured for optical microscope observations; testing at the test location with an objective testing module, the objective testing module includes a mechanical testing assembly configured to mechanically test at a macro scale or less; and quantitatively determining one or more properties of the sample with the mechanical testing assembly.

Example 20 can include, or can optionally be combined with the subject matter of Examples 1-19 to optionally include moving the objective turret, the optical instrument and the objective testing module coupled with the objective turret, the objective testing module is aligned with the test location through movement of the objective turret.

Example 21 can include, or can optionally be combined with the subject matter of Examples 1-20 to optionally include wherein moving the objective turret includes rotating the objective turret and the objective testing module and the optical instrument relative to a microscope body.

Example 22 can include, or can optionally be combined with the subject matter of Examples 1-21 to optionally include wherein testing at the test location includes: moving a probe into the sample at the test location with a transducer, and measuring one or more of force applied at the test location with the probe or displacement of the probe at the test location.

Example 23 can include, or can optionally be combined with the subject matter of Examples 1-22 to optionally include wherein moving the probe into the sample includes moving the probe from an elevated position to an at least partially submerged position within a medium to engage the sample submerged in the medium.

Example 24 can include, or can optionally be combined with the subject matter of Examples 1-23 to optionally include approaching the test location with a first actuator coupled between a module base of the objective testing module and the mechanical testing assembly, and the first actuator moves the mechanical testing assembly along one or more axes.

Example 25 can include, or can optionally be combined with the subject matter of Examples 1-24 to optionally include wherein approaching the test location includes movement along a z axis and one or more of movement along an x or y axis of a probe of the mechanical testing assembly.

Example 26 can include, or can optionally be combined with the subject matter of Examples 1-25 to optionally include wherein approaching the test location with the first actuator includes the first actuator moving the mechanical testing assembly through a range of motion of 100 microns or less.

Example 27 can include, or can optionally be combined with the subject matter of Examples 1-26 to optionally include wherein approaching the test location includes approaching the test location with a second actuator coupled between the module base and the first actuator, and the second actuator moves the mechanical testing assembly along one or more axes.

Example 28 can include, or can optionally be combined with the subject matter of Examples 1-27 to optionally include wherein approaching the test location with the second actuator includes the second actuator moving the mechanical testing assembly through a range of motion of 1 millimeter or less.

Example 29 can include, or can optionally be combined with the subject matter of Examples 1-28 to optionally include wherein quantitatively determining the one or more properties of the sample includes assessing the one or more properties of the sample with a property assessment module according to the testing at the test location.

Example 30 can include, or can optionally be combined with the subject matter of Examples 1-29 to optionally include installing the objective testing module within an objective socket of an objective turret.

Example 31 can include, or can optionally be combined with the subject matter of Examples 1-30 to optionally include in-situ observation of the test location during testing at the test location with the objective testing module.

Example 32 can include, or can optionally be combined with the subject matter of Examples 1-31 to optionally include wherein testing at the test location includes testing at the test location with the objective testing module in a first orientation, and in-situ observation of the test location includes observing the test location in a second orientation, different from the first orientation.

Example 33 can include, or can optionally be combined with the subject matter of Examples 1-32 to optionally include wherein testing at the test location includes electrical characteristic testing.

Example 34 can include, or can optionally be combined with the subject matter of Examples 1-33 to optionally include wherein testing at the test location includes mechanical deformation based testing of biological or transparent materials.

Example 35 can include, or can optionally be combined with the subject matter of Examples 1-34 to optionally include wherein testing at the test location includes dynamic mechanical testing.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims.

## Claims

1. An objective testing module (108) configured for installation within an objective turret (104) of an optical microscope, the objective testing module (108) comprising:
a module base (300) configured for coupling with an objective socket (400) of a movable objective turret (104) of an optical microscope, and
a mechanical testing assembly (112) coupled with the module base (300), the mechanical testing assembly including a probe (114) that is movable relative to the module base (300), wherein the mechanical testing assembly (112) includes one or more transducers coupled with the probe (412, 414), and the one or more transducers (412, 414) move the probe (114) relative to the module base (300), measure force applied to the sample (200) by the probe (114), and measure displacement of the probe (114) within the sample (200), and the mechanical testing assembly (112) is configured to mechanically test the sample (200) at a scale of 1 mm or less and quantitatively determine one or more properties of the sample (200).

2. The objective testing module of claim 1, wherein the one or more transducers (412, 414) include at least first (602) and second (604, 606) capacitive transducers, and the first (602) capacitive transducer provides translation for the probe (114) along a z-axis, and the second (604, 606) capacitive transducer provides movement for the probe (114) along a second axis transverse to the z-axis, wherein the z axis is an axis that is orthogonal to a plane of the sample (200).

3. The objective testing module of claim 1, wherein at least the probe (114) is movable between two or more positions including:
an elevated position, and
an at least partially submerged position, wherein the probe (114) is partially submerged within a medium to engage a sample (200) submerged in the medium.

4. The objective testing module of claim 1 comprising a controller (202) having a property assessment module, the controller (202) is in communication with the mechanical testing assembly (112), and the property assessment module assesses the one or more mechanical properties of the sample (200) according to mechanical testing by the mechanical testing assembly (112).

5. The objective testing module of claim 1 comprising a first actuator (302) coupled between the module base (300) and the mechanical testing assembly (112), and the first actuator (302) is configured to move the mechanical testing assembly (112) relative to the module base (300).

6. The objective testing module of claim 5 comprising a second actuator (304) coupled between the module base (300) and the first actuator (302), and the second actuator (304) is configured to move the mechanical testing assembly (112) and the first actuator (302).

7. A method of testing a sample (200) comprising:
locating a test location on a sample (200) using an optical objective (106) on a movable objective turret (104) of an optical microscope configured for optical microscope observations;
testing a mechanical response of the sample (200) at the test location with an objective testing module (108), the objective testing module (108) includes a mechanical testing assembly (112) coupled to a module base (300), the mechanical testing assembly (112) includes a probe (114), and the mechanical testing assembly (112) includes one or more transducers (412, 414) coupled with the probe (114), the one or more transducers (412, 414) configured to move the probe (114) relative to the module base (300), to measure a force applied to the sample (200) by the probe (114), and to measure displacement of the probe (114), wherein the testing includes mechanically testing the sample (200) at a scale of 1 mm or less by measuring force applied to the sample (200) by the probe (114) and by measuring displacement of the probe (114) itself relative to the module base (300) of the objective testing module (108), and wherein the module base (300) of the objective testing module (108) is coupled to an objective socket (400) of the movable objective turret (104) of the optical microscope; and quantitatively determining one or more properties of the sample (200) with the mechanical testing assembly (112).

8. The method of claim 7 comprising moving the objective turret (104), the optical objective (106) and the objective testing module (108) coupled with the objective turret (104), the objective testing module (108) is aligned with the test location through movement of the objective turret (104).

9. The method of claim 7, wherein testing at the test location includes:
moving a probe (114) into the sample (200) at the test location with a transducer (412, 414).

10. The method of claim 9, wherein moving the probe (114) into the sample (200) includes moving the probe (114) from an elevated position to an at least partially submerged position within a medium to engage the sample (200) submerged in the medium.

11. The method of claim 7 comprising approaching the test location with a first actuator (302) coupled between a module base (300) of the objective testing module (108) and the mechanical testing assembly (112), and the first actuator (302) moves the mechanical testing assembly (112) along one or more axes.

12. The method of claim 11, wherein approaching the test location includes movement along a z axis and one or more of movement along an x or y axis of a probe (114) of the mechanical testing assembly (112), wherein the z axis is an axis that is orthogonal to a plane of the sample, and wherein the x and y axes are axes parallel to the plane of the sample (200).

13. The method of claim 7 comprising installing the objective testing module (108) within an optical objective socket (400) of an objective turret (104).

14. The method of claim 7 comprising in-situ observation of the test location during testing at the test location with the objective testing module (108), and
wherein testing at the test location includes testing at the test location with the objective testing module (108) in a first orientation, and in-situ observation of the test location includes observing the test location in a second orientation, different from the first orientation.

15. The method of claim 7, wherein testing at the test location includes mechanical deformation based testing of biological or transparent materials.

## Patentansprüche

1. Objektivtestmodul (108), das zur Installation innerhalb eines Objektivrevolvers (104) eines optischen Mikroskops konfiguriert ist, welches Objektivtestmodul (108) aufweist:
eine Modulbasis (300), die konfiguriert ist zur Kopplung mit einer Objektivfassung (400) eines bewegbaren Objektrevolvers (104) eines optischen Mikroskops, und
eine mechanische Testanordnung (112), die mit der Modulbasis (300), gekoppelt ist, welche mechanische Testanordnung eine Sonde (114) enthält, die relativ zu der Modulbasis (300) bewegbar ist, wobei die mechanische Testanordnung (112) einen oder mehrere mit der Sonde (412, 414) gekoppelte Wandler enthält, und der eine oder die mehreren Wandler (412, 414) die Sonde (114) relativ zu der Modulbasis (300) bewegen, eine durch die Sonde (114) auf die Probe (200) ausgeübte Kraft messen und eine Versetzung der Sonde (114) innerhalb der Probe (200) messen,
und die mechanische Testanordnung (112) konfiguriert ist zum mechanischen Testen der Probe (200) in einem Bereich von 1 mm oder weniger und zum quantitativen Bestimmen von einer oder mehreren Eigenschaften der Probe (200).

2. Objektivtestmodul nach Anspruch 1, bei dem der eine oder die mehreren Wandler (412, 414) zumindest einen ersten (602) und einen zweiten (604, 606) kapazitiven Wandler enthalten, und der erste (602) kapazitive Wandler eine Translation der Sonde (114) entlang einer z-Achse vorsieht und der zweite (604, 606) kapazitive Wandler eine Bewegung der Sonde (114) entlang einer zweiten Achse quer zu der z-Achse vorsieht, wobei die z-Achse eine Achse ist, die orthogonal zu einer Ebene der Probe (200) ist.

3. Objektivtestmodul nach Anspruch 1, bei dem zumindest die Sonde (114) zwischen zwei oder mehr Positionen bewegbar ist, die enthalten:
eine erhöhte Position, und
eine zumindest teilweise untergetauchte Position, wobei die Sonde (114) teilweise in einem Medium untergetaucht ist für den Eingriff mit einer in dem Medium untergetauchten Probe (200).

4. Objektivtestmodul nach Anspruch 1, aufweisend eine Steuervorrichtung (202) mit einem Eigenschaftsbewertungsmodul, wobei die Steuervorrichtung (202) mit der mechanischen Testanordnung (112) kommuniziert und das Eigenschaftsbewertungsmodul die eine oder die mehreren mechanischen Eigenschaften der Probe (200) gemäß dem mechanischen Testen durch die mechanische Testanordnung (112) bewertet.

5. Objektivtestmodul nach Anspruch 1, aufweisend einen ersten Aktuator (302), der zwischen die Modulbasis (300) und die mechanische Testanordnung (112) gekoppelt ist, wobei der erste Aktuator (302) konfiguriert ist zum Bewegen der mechanischen Testanordnung (112) relativ zu der Modulbasis (300).

6. Objektivtestmodul nach Anspruch 5, aufweisend einen zweiten Aktuator (304), der zwischen die Modulbasis (300) und den ersten Aktuator (302) gekoppelt ist, wobei der zweite Aktuator (304) konfiguriert ist zum Bewegen der mechanischen Testanordnung (112) und des ersten Aktuators (302).

7. Verfahren zum Testen einer Probe (200), welches aufweist:
Festlegen eines Testortes auf einer Probe (200) unter Verwendung eines optischen Objektivs (106) auf einem bewegbaren Objektivrevolver (104) eines optischen Mikroskops, das für optische Mikroskopbeobachtungen konfiguriert ist;
Testen einer mechanischen Antwort der Probe (200) an dem Testort mit einem Objekttestmodul (108), welches Objektivtestmodul (108) eine mechanische Testanordnung (112) enthält, die mit einer Modulbasis (300) gekoppelt ist, wobei die mechanische Testanordnung (112) eine Sonde (114) enthält, und die mechanische Testanordnung (112) einen oder mehrere Wandler (412, 414) enthält, die mit der Sonde (114) gekoppelt sind, und der eine oder die mehreren Wandler (412, 414) konfiguriert sind zum Bewegen der Sonde (114) relativ zu der Modulbasis (300), um eine von der Sonde (114) auf die Probe (200) ausgeübte Kraft zu messen und eine Versetzung der Sonde (114) zu messen,
wobei das Testen enthält:
mechanisches Testen der Probe (200) in einem Bereich von 1 mm oder weniger durch Messen der von der Sonde (114) auf die Probe (200) ausgeübten Kraft und durch Messen der Versetzung der Sonde (114) selbst relativ zu der Modulbasis (300) des Objektivtestmoduls (108), und wobei die Modulbasis (300) des Objektivtestmoduls (108) mit einer Objektivfassung (400) des bewegbaren Objektivrevolvers (104) des optischen Mikroskops gekoppelt ist; und
quantitatives Bestimmen von einer oder mehreren Eigenschaften der Probe (200) mit der mechanischen Testanordnung (112).

8. Verfahren nach Anspruch 7, aufweisend das Bewegen des Objektivrevolvers (104), des optischen Objektivs (106) und des Objektivtestmoduls (108), das mit dem Objektivrevolver (104) gekoppelt ist, wobei das Objektivtestmodul (108) mit dem Testort durch die Bewegung des Objektivrevolvers (104) ausgerichtet wird.

9. Verfahren nach Anspruch 7, bei dem das Testen an dem Testort enthält:
Bewegen einer Sonde (114) in die Probe (200) an dem Testort mit einem Wandler (412, 414).

10. Verfahren nach Anspruch 9, bei dem das Bewegen der Sonde (114) in die Probe (200) das Bewegen der Sonde (114) von einer erhöhten Position zu einer zumindest teilweise untergetauchten Position innerhalb eines Mediums für den Eingriff mit der in dem Medium untergetauchten Probe (200) enthält.

11. Verfahren nach Anspruch 7, aufweisend ds Annähern an den Testort mit einem ersten Aktuator (302), der zwischen eine Modulbasis (300) des Objektivtestmoduls (108) und die mechanische Testanordnung (112) gekoppelt ist, wobei der erste Aktuator (302) die mechanische Testanordnung (112) entlang einer oder mehrerer Achsen bewegt.

12. Verfahren nach Anspruch 11, bei dem das Annähern an den Testort eine Bewegung entlang einer z-Achse und eine oder mehrere Bewegungen entlang einer x- oder y-Achse einer Sonde (114) der mechanischen Testanordnung (112) enthält,
wobei die z-Achse eine Achse ist, die orthogonal zu einer Ebene der Probe ist, und wobei die x- und die y-Achse Achsen parallel zu der Ebene der Probe (200) sind.

13. Verfahren nach Anspruch 7, aufweisend das Installieren des Objektivtestmoduls (108) innerhalb einer Fassung (400) des optischen Objektivs eines Objektivrevolvers (104).

14. Verfahren nach Anspruch 7, aufweisend eine in-situ-Beobachtung des Testorts während des Testens an dem Testort mit dem Objektivtestmodul (108),
wobei das Testen an dem Testort das Testen an dem Testort mit dem Objektivtestmodul (108) in einer ersten Orientierung enthält, und die in-situ-Beobachtung des Testorts das Beobachten des Testorts in einer zweiten Orientierung, die von der ersten Orientierung verschieden ist, enthält.

15. Verfahren nach Anspruch 7, bei dem das Testen an dem Testort ein auf einer mechanischen Verformung basierendes Testen von biologischen oder transparenten Materialien enthält.

## Revendications

1. Module de test d'objectif (108) configuré de manière à être installé à l'intérieur d'une tourelle porte-objectif (104) d'un microscope optique, le module de test d'objectif (108) comprenant :
une base de module (300) qui est configurée de manière à être couplée à une douille d'objectif (400) d'une tourelle porte-objectif mobile (104) d'un microscope optique ; et
un assemblage de test mécanique (112) qui est couplé à la base de module (300), l'assemblage de test mécanique incluant une sonde (114) qui peut être déplacée par rapport à la base de module (300), dans lequel :
l'assemblage de test mécanique (112) inclut un ou plusieurs transducteur(s) (412, 414) qui est/sont couplé(s) à la sonde (114), et les un ou plusieurs transducteurs (412, 414) déplacent la sonde (114) par rapport à la base de module (300), mesurent une force qui est appliquée à l'échantillon (200) au moyen de la sonde (114) et mesurent le déplacement de la sonde (114) à l'intérieur de l'échantillon (200) ; et
l'assemblage de test mécanique (112) est configuré de manière à tester mécaniquement l'échantillon (200) à une échelle de 1 mm ou moins et de manière à déterminer de façon quantitative une ou plusieurs propriété(s) de l'échantillon (200).

2. Module de test d'objectif selon la revendication 1, dans lequel les un ou plusieurs transducteurs (412, 414) incluent au moins des premier (602) et second (604, 606) transducteurs capacitifs, et le premier transducteur capacitif (602) assure une translation de la sonde (114) suivant un axe z, et le second transducteur capacitif (604, 606) assure un déplacement de la sonde (114) suivant un second axe qui est transversal à l'axe z, dans lequel l'axe z est un axe qui est orthogonal à un plan de l'échantillon (200).

3. Module de test d'objectif selon la revendication 1, dans lequel au moins la sonde (114) est mobile entre deux positions ou plus incluant :
une position élevée ; et
une position au moins partiellement submergée, dans lequel la sonde (114) est partiellement submergée à l'intérieur d'un milieu de manière à engager un échantillon (200) submergé dans le milieu.

4. Module de test d'objectif selon la revendication 1, comprenant un contrôleur (202) qui comporte un module d'évaluation de propriété, le contrôleur (202) est en communication avec l'assemblage de test mécanique (112), et le module d'évaluation de propriété évalue les une ou plusieurs propriétés mécaniques de l'échantillon (200) conformément à un test mécanique effectué au moyen de l'assemblage de test mécanique (112).

5. Module de test d'objectif selon la revendication 1, comprenant un premier actionneur (302) qui est couplé entre la base de module (300) et l'assemblage de test mécanique (112), et le premier actionneur (302) est configuré de manière à déplacer l'assemblage de test mécanique (112) par rapport à la base de module (300).

6. Module de test d'objectif selon la revendication 5, comprenant un second actionneur (304) qui est couplé entre la base de module (300) et le premier actionneur (302), et le second actionneur (304) est configuré de manière à déplacer l'assemblage de test mécanique (112) et le premier actionneur (302).

7. Procédé de test d'un échantillon (200) comprenant :
la localisation d'un site de test sur un échantillon (200) en utilisant un objectif optique (106) sur une tourelle porte-objectif mobile (104) d'un microscope optique qui est configuré pour des observations par microscope optique ;
le test d'une réponse mécanique de l'échantillon (200) au niveau du site de test à l'aide d'un module de test d'objectif (108), le module de test d'objectif (108) inclut un assemblage de test mécanique (112) qui est couplé à une base de module (300), l'assemblage de test mécanique (112) inclut une sonde (114) et l'assemblage de test mécanique (112) inclut un ou plusieurs transducteur(s) (412, 414) qui est/sont couplé(s) à la sonde (114), et les un ou plusieurs transducteurs (412, 414) sont configurés de manière à déplacer la sonde (114) par rapport à la base de module (300), de manière à mesurer une force qui est appliquée à l'échantillon (200) au moyen de la sonde (114) et de manière à mesurer un déplacement de la sonde (114), dans lequel le test inclut le test mécanique de l'échantillon (200) à une échelle de 1 mm ou moins en mesurant une force qui est appliquée à l'échantillon (200) au moyen de la sonde (114) et en mesurant un déplacement de la sonde (114) elle-même par rapport à la base de module (300) du module de test d'objectif (108), et dans lequel la base de module (300) du module de test d'objectif (108) est couplée à une douille d'objectif (400) de la tourelle porte-objectif mobile (104) du microscope optique ; et
la détermination de façon quantitative d'une ou de plusieurs propriété(s) de l'échantillon (200) à l'aide de l'assemblage de test mécanique (112)

8. Procédé selon la revendication 7, comprenant le déplacement de la tourelle porte-objectif (104), de l'objectif optique (106) et du module de test d'objectif (108) en couplage avec la tourelle porte-objectif (104), le module de test d'objectif (108) est aligné avec le site de test par l'intermédiaire d'un déplacement de la tourelle porte-objectif (104).

9. Procédé selon la revendication 7, dans lequel le test au niveau du site de test inclut :
le déplacement d'une sonde (114) à l'intérieur de l'échantillon (200) au niveau du site de test à l'aide d'un transducteur (412, 414).

10. Procédé selon la revendication 9, dans lequel le déplacement de la sonde (114) à l'intérieur de l'échantillon (200) inclut le déplacement de la sonde (114) depuis une position élevée jusqu'à une position au moins partiellement submergée à l'intérieur d'un milieu de manière à engager l'échantillon (200) submergé dans le milieu.

11. Procédé selon la revendication 7, comprenant l'approche du site de test à l'aide d'un premier actionneur (302) qui est couplé entre une base de module (300) du module de test d'objectif (108) et l'assemblage de test mécanique (112), et le premier actionneur (302) déplace l'assemblage de test mécanique (112) suivant un ou plusieurs axe(s).

12. Procédé selon la revendication 11, dans lequel l'approche du site de test inclut un déplacement suivant un axe z et un ou plusieurs déplacement(s) pris parmi un déplacement suivant un axe x ou un déplacement suivant un axe y d'une sonde (114) de l'assemblage de test mécanique (112), dans lequel l'axe z est un axe qui est orthogonal à un plan de l'échantillon, et dans lequel les axes x et y sont des axes qui sont parallèles au plan de l'échantillon (200).

13. Procédé selon la revendication 7, comprenant l'installation du module de test d'objectif (108) à l'intérieur d'une douille d'objectif optique (400) d'une tourelle porte-objectif (104).

14. Procédé selon la revendication 7, comprenant une observation in situ du site de test pendant le test au niveau du site de test à l'aide du module de test d'objectif (108), et dans lequel le test au niveau du site de test inclut le test au niveau du site de test à l'aide du module de test d'objectif (108) selon une première orientation, et une observation in situ du site de test inclut l'observation du site de test selon une seconde orientation qui est différente de la première orientation.

15. Procédé selon la revendication 7, dans lequel le test au niveau du site de test inclut une déformation mécanique sur la base du test de matières biologiques ou transparentes.
